# FASCICULE DE BREVET EUROPEEN

(11) **EP 1 850 041 B1**
(45) Date de publication et mention de la délivrance du brevet: **13.05.2009**
(21) Numéro de dépôt: 07290515.1
(22) Date de dépôt: 25.04.2007
(51) Int. Cl.: F16K 1/30, F16K 3/26

(54) **Robinet de raccordement d'un emballage de conditionnement de gaz liquéfié à une installation et emballage sur lequel est monté le robinet**
Hahn zum Anschluss eines Verpackungsbehälters für Flüssiggas an eine Anlage und Behälter, auf dem der Hahn angebracht ist
Connection valve for a container containing liquefied gas to an installation and container on which the valve is mounted

(30) Priorité: 25.04.2006 FR 0603672
(43) Date de publication de la demande: 31.10.2007
(73) Titulaire: Avantec Hispania, 46002 Valencia (ES)
(72) Inventeur: Morote, Christophe, 69960 Corbas (FR)
(74) Mandataire: Bloch, Gérard

(56) Documents cités:
- EP-A1- 0 122 378
- US-A- 2 509 671
- US-A- 4 396 154
- US-A- 5 148 830
- US-A- 5 738 145
- US-A- 5 787 921

## Description

L'invention concerne un robinet pour emballage de conditionnement de gaz liquéfié, c'est-à-dire un dispositif permettant d'établir l'écoulement du gaz de l'emballage dans une installation destinée à utiliser le gaz, souvent par l'intermédiaire d'une conduite raccordée au robinet et à l'installation.

Les emballages de conditionnement sont conçus pour résister à une certaine pression. Les robinets classiques tels que celui décrit dans US 5 738 145 A, pour de tels emballages, sont généralement vissés et comportent une sortie filetée de raccordement à l'installation ou à la conduite, le raccordement s'effectuant par l'intermédiaire d'un joint d'étanchéité. Ces robinets comportent également un volant rotatif d'entraînement en déplacement d'un pointeau d'étanchéité, contrôlant le passage du gaz de l'emballage dans le robinet. Ces robinets présentent quelques inconvénients.

L'ouverture et la fermeture d'un robinet sont réalisées en tournant le volant dans un sens et dans l'autre pour déplacer le pointeau et, ce, en un temps qui dépend du type de robinet. En cas de fuite au niveau du pointeau, le temps de fermeture devient précieux et le fait de le réduire améliore grandement la sécurité. Mais cela reste un souci pour les opérateurs.

Au niveau de la sortie du robinet, un joint est obligatoire si on veut éviter une fuite.

Enfin, quand, pour une installation, on change d'emballage, le gaz contenu dans l'espace du robinet en aval du pointeau s'échappe.

Il existe des raccords qui se voulaient traiter ces trois difficultés, mais, malheureusement, en en générant une autre. Il s'agit de raccords dits rapides qui comportent un clapet de sortie. L'espace compris entre le pointeau et le clapet est rempli de gaz liquide. Si la température augmente, le volume de gaz va aussi augmenter et les forces exercées sur l'emballage en même temps, avec même un risque de rupture.

C'est pourquoi d'ailleurs tous les robinets actuellement sur le marché possèdent une sortie ouverte à la pression atmosphérique.

L'objet de la présente demande est donc de proposer un robinet satisfaisant à tous égards.

Ainsi, l'invention concerne un robinet de raccordement d'un emballage de conditionnement de gaz liquéfié à une installation d'utilisation, comprenant un corps agencé pour, en entrée, être monté sur l'emballage, et comportant, en sortie, des moyens de raccordement rapide à l'installation, caractérisé par le fait que le corps comporte une chambre amont en communication avec un canal d'entrée et une chambre aval en communication avec un canal de sortie, une bague montée coulissante sur le corps pour mettre les deux chambres en communication ou les isoler l'une de l'autre, et un clapet de décharge entre les deux chambres pour les faire communiquer en cas de surpression dans la chambre aval et le canal de sortie.

Le robinet de l'invention présente déjà l'avantage d'être à ouverture/fermeture simples et rapides, par un seul geste d'entraînement en coulissement de la bague coulissante.

Par ailleurs, et surtout, le liquide emprisonné dans la chambre aval et le canal de sortie, entre le clapet de décharge et les moyens de raccordement rapide de sortie, va, au-delà d'une certaine pression supérieure à un seuil défini par les caractéristiques du corps de robinet et du clapet de décharge, être renvoyé dans l'emballage grâce au décollement de son siège du clapet de décharge jouant ainsi une fonction de clapet de sûreté.

Dans la forme de réalisation préférée du robinet de l'invention, les moyens de raccordement rapide de sortie sont auto-obstruants et sans joint, avec pour double avantage i) d'assurer une étanchéité parfaite lors du raccordement, sans risque d'échappement de gaz, et ii) de permettre le détachement du robinet de l'installation, avec la bague en position de mise en communication des deux chambres, sans risque non plus de fuite.

Avantageusement, les moyens de raccordement rapide comprennent un embout mâle monté à l'extrémité aval du corps de robinet dans lequel est monté un clapet d'écoulement à face plane.

De préférence, le robinet comporte un adaptateur de raccordement sur l'emballage et sur lequel est monté le corps de robinet.

Dans la forme de réalisation préférée du robinet, les deux chambres débouchent sur la paroi externe du corps de robinet par des conduits pouvant être mis en communication par un évidement annulaire ménagé dans la bague coulissante, elle-même étant agencée pour obturer sélectivement les conduits des deux chambres.

L'invention concerne également un emballage de conditionnement de gaz liquéfié sur lequel est monté le robinet de l'invention.

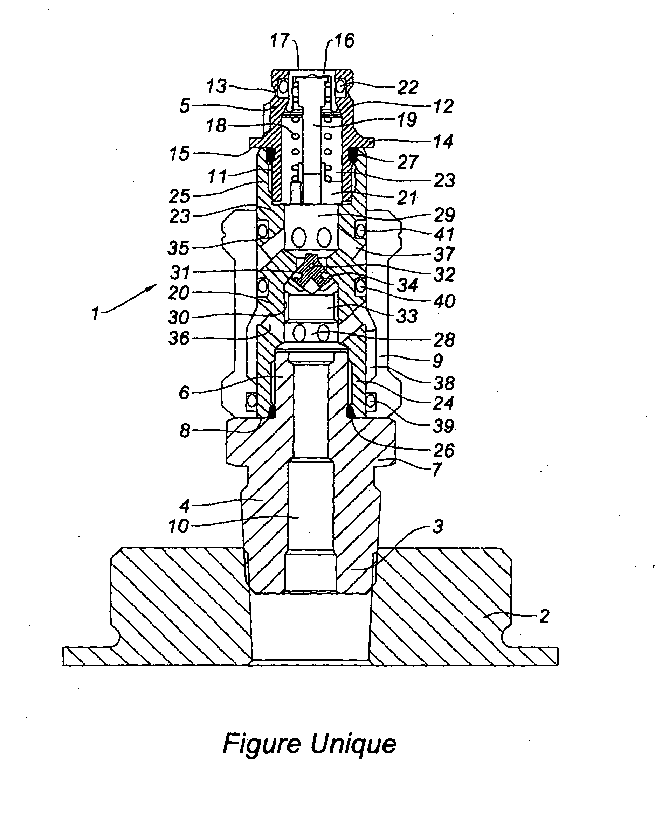

L'invention sera mieux comprise à l'aide de la description suivante de la forme de réalisation préférée du robinet de l'invention, en référence à la figure unique en annexe qui est une vue en coupe axiale du robinet.

Le robinet de raccordement 1 qui va maintenant être décrit se visse dans le col 2 d'une bouteille d'emballage à pression de conditionnement d'un gaz liquéfié, ici par l'embout mâle fileté 3 d'un adaptateur 4. Comme gaz liquéfié, on citera, à titre d'exemple, du chlore liquéfié.

Le robinet 1 comporte un corps central 20, un adaptateur d'entrée 4 et un embout de raccordement de sortie 5.

L'adaptateur 4 comporte donc une première portion d'embout mâle fileté 3 de montage sur le col de l'emballage, une deuxième portion d'embout mâle fileté 6 vissé dans le corps central 20 du robinet, les deux portions d'embout d'extrémité 3, 6 étant séparées par une portion centrale 7 de diamètre élargi pour former un épaulement de butée amont 8 pour une bague de mise en communication 9, dont il sera question ci-après. Un canal d'entrée 10, ici étagé, s'étend à travers l'adaptateur 4.

L'embout de raccordement de sortie 5, de forme générale semblable à celle de l'adaptateur 4, comporte une première portion d'embout mâle fileté 11 de montage sur le corps central 20 du robinet, une deuxième portion d'embout mâle 12 de raccordement rapide à une installation, par l'intermédiaire d'une gorge annulaire périphérique 13, les deux portions d'embout étant séparées par une portion centrale 14 en forme de collerette annulaire formant un épaulement de butée aval 15 pour la bague 9. L'intérieur de l'embout 5 forme un canal de sortie 23 obturé, au repos, par un clapet d'écoulement 16 à face plane 17, sous l'action d'un ressort de rappel 18 s'étendant autour de la tige du clapet 19 et entre le fond intérieur du clapet 16 et des ailettes 21. L'étanchéité entre l'extrémité de la deuxième portion d'embout 12 et le clapet 16 est assurée par un joint torique 22.

L'embout de raccordement 5 constitue un raccord rapide.

Le corps central 20 comporte une partie intermédiaire 23, dans laquelle sont ménagées deux chambres et qui est prolongée par deux jupes annulaires taraudées 24, 25 vissées sur les embouts 6, 11, jusqu'en butée contre l'épaulement 8 de l'adaptateur 4 et la collerette 14 de l'embout de raccordement de sortie 5, avec interposition respectivement des joints toriques d'étanchéité 26, 27.

La partie intermédiaire 23 du corps central 20 comporte donc une première chambre amont 28 en communication avec le canal d'entrée 10 de l'adaptateur 4 et une deuxième chambre aval 29 en communication avec le canal de sortie 23 de l'embout de raccordement 5. Les deux chambres 28, 29 sont reliées entre elles par un conduit central 30 offrant un siège 31 à un clapet de décharge et de sûreté 32 rappelé contre le siège 31 par un ressort 33, avec interposition d'un joint 34.

La chambre amont 28 débouche sur la paroi externe 35 du corps du robinet par des conduits transversaux 36. De même, la chambre aval 29 débouche sur la paroi externe 35 par des conduits transversaux 37.

Une bague 9 est montée coulissante sur le corps central 20 entre la portion centrale 7 de l'adaptateur 4 et la collerette 14 de l'embout de raccordement 5. Le diamètre intérieur de la bague est sensiblement égal au diamètre extérieur du corps central 20 du robinet, pour pouvoir obturer les conduits 36, 37, sauf sur une petite portion axiale le long de laquelle est ménagé un évidement annulaire 38 s'étendant sur une longueur permettant de mettre les conduits 36, 37 des chambres 28, 29 en communication. La bague 9 est montée sur le corps central 2 avec interposition ici de trois joints toriques d'étanchéité 39, 40, 41, au niveau respectivement des deux renflements d'extrémité de préhension de la bague et dans sa partie médiane.

Le fonctionnement du robinet de raccordement va maintenant être expliqué.

Après avoir monté le robinet sur le col 2 de la bouteille d'emballage de gaz liquéfié, en y vissant l'adaptateur 3, d'une part, et raccordé l'embout de raccordement 5 à l'interface d'entrée de l'installation par clipsage dans la gorge 13 et déplacement du clapet 16 vers l'intérieur de l'embout contre l'action du ressort 18, d'autre part, on peut procéder au transfert de gaz de la bouteille 2 vers l'installation. Dans la position axiale de la bague 9 sur le corps central 2 du robinet, représentée à la figure, les conduits 37 de la chambre aval 29 sont obturés par la bague. Pour procéder au transfert, il suffit de faire coulisser la bague 9 vers la collerette 14 de l'embout de raccordement 5, jusqu'en butée sur cette collerette, pour que l'évidement annulaire 38 de la bague s'étende axialement légèrement de part et d'autre des embouchures des conduits 36, 37 des deux chambres amont 28 et aval 29 et que ces deux chambres soient ainsi mises en communication.

Alors, le gaz peut s'écouler à travers le canal d'entrée 10, la chambre amont 9, ses conduits 36, l'évidement annulaire 38 de la bague 9, les conduits 37 et la chambre aval 29, le canal de sortie 23 de l'embout de raccordement 5 puis l'espace annulaire entre le clapet 16 et son siège dans l'embout 5.

Un retour de la bague 9 en butée contre la portion centrale élargie 7 de l'adaptateur isole à nouveau les deux chambres l'une de l'autre.

Si après avoir déconnecté l'emballage de l'installation, le robinet 1 étant resté monté sur l'emballage et le clapet 16 rappelé sur son siège, la température se met à monter et qu'il soit resté du gaz dans la chambre aval 29 et le canal de sortie 23, au-delà d'un seuil de pression, déterminé notamment par les dimensions du clapet de décharge 32, son siège 31 et son ressort 33, le clapet 32 mettra les deux chambres 28, 29 en communication et donc la chambre aval 29 en communication avec l'intérieur de l'emballage, ce qui évitera tout risque.

## Revendications

1. Robinet de raccordement d'un emballage (2) de conditionnement de gaz liquéfié à une installation d'utilisation, comprenant un corps (1) agencé pour, en entrée, être monté sur l'emballage (2), et comportant, en sortie, des moyens (5) de raccordement rapide à l'installation, dans lequel le corps comporte une chambre amont (28) en communication avec un canal d'entrée (10) et une chambre aval (29) en communication avec un canal de sortie (23), le robinet comprenant un clapet de décharge (32) entre les deux chambres pour les faire communiquer en cas de surpression dans la chambre aval (29) et le canal de sortie (23), **caractérisé par le fait qu'**une bague (9) est, montée coulissante sur le corps pour mettre les deux chambres (28, 29) en communication ou les isoler l'une de l'autre

2. Robinet selon la revendication 1, dans lequel les moyens de raccordement rapide de sortie (5) sont auto-obstruants et sans joint.

3. Robinet selon l'une des revendications 1 et 2 dans lequel les moyens de raccordement rapide comprennent un embout mâle (5) monté à l'extrémité aval du corps de robinet (1, 20) dans lequel est monté un clapet d'écoulement (16) à face plane (17).

4. Robinet selon l'une des revendications 1 à 3, dans lequel le robinet comporte un adaptateur (4) de raccordement sur l'emballage (2) et sur lequel est monté le corps du robinet (20).

5. Robinet selon l'une des revendications 1 à 4, dans lequel les deux chambres (28, 29) débouchent sur la paroi externe du corps de robinet par des conduits (36, 37) pouvant être mis en communication par un évidement annulaire ménagé (38) dans la bague coulissante (9).

6. Robinet selon la revendication 5, dans lequel la bague coulissante (9) est agencée pour obturer sélectivement les conduits (36, 37) des deux chambres (28, 29).

7. Emballage de conditionnement de gaz liquéfié sur lequel est monté un robinet selon l'une des revendications 1 à 6.

## Claims

1. Tap for connecting a container (2) for packaging liquefied gas to a user installation, comprising a body (1) provided in order, at the inlet, to be mounted on the container (2), and comprising, at the outlet, means (5) for rapid connection to the installation, in which the body comprises an upstream chamber (28) which is in communication with an inlet channel (10) and a downstream chamber (29) which is in communication with an outlet channel (23), the tap comprising a discharge flap (32) between the two chambers in order to make them communicate in the case of excess pressure in the downstream chamber (29) and the outlet channel (23), **characterised in that** a ring (9) is mounted sliding on the body in order to put the two chambers (28, 29) in communication or to isolate them from each other.

2. Tap according to claim 1, in which the means for rapid connection of the outlet (5) are self-blocking and with no jointing.

3. Tap according to one of the claims 1 and 2, in which the means for rapid connection comprise a male joining piece (5) which is mounted at the downstream end of the tap body (1, 20) in which an outflow flap (16) with a planar face (17) is mounted.

4. Tap according to one of the claims 1 to 3, in which the tap comprises an adaptor (4) for connection onto the container (2) and on which the body of the tap (20) is mounted.

5. Tap according to one of the claims 1 to 4, in which the two chambers (28, 29) open out onto the external wall of the tap body via conduits (36, 37), which are able to be put in communication by an annular recess which is provided (38) in the sliding ring (9).

6. Tap according to claim 5, in which the sliding ring (9) is designed to seal selectively the conduits (36, 37) of the two chambers (28, 29).

7. Container for packaging liquefied gas on which there is mounted a tap according to one of the claims 1 to 6.

## Patentansprüche

1. Ventil zum Anschluss eines Verpackungsbehälters (2) für Flüssiggas an eine Verbrauchsanlage, mit einem Körper (1), der eintrittsseitig auf dem Verpackungsbehälter (2) montierbar ist und austrittsseitig Mittel (5) zum Schnellanschluss an die Anlage aufweist, wobei der Körper eine mit einem Eintrittskanal (10) in Verbindung stehende stromauf gelegene Kammer (28) und eine mit einem Austrittskanal (23) in Verbindung stehende stromab gelegene Kammer (29) aufweist, wobei das Ventil ein Entlastungs-Klappenventil (32) zwischen den beiden Kammern aufweist, um diese im Falle eines Überdrucks in der stromab gelegenen Kammer (29) und im Austrittskanal (23) in Verbindung miteinander treten zu lassen, **dadurch gekennzeichnet, dass** ein Ring (9) verschieblich auf dem Körper montiert ist, um die beiden Kammern (28, 29) miteinander in Verbindung zu bringen oder sie voneinander zu trennen.

2. Ventil nach Anspruch 1, wobei die austrittsseitigen Mittel (5) zum Schnellanschluss selbstschließend und ohne Dichtung ausgebildet sind.

3. Ventil nach einem der Ansprüche 1 und 2, wobei die Mittel zum Schnellanschluss einen am stromab gelegenen Ende des Ventilkörpers (1, 20) montierten Rohrstutzen (5) aufweisen, in welchem ein Auslass-Klappenventil (16) mit ebener Fläche (17) montiert ist.

4. Ventil nach einem der Ansprüche 1 bis 3, wobei das Ventil einen Adapter (4) aufweist, der zum Anschluss auf den Verpackungsbehälter (2) dient und auf welchem der Ventilkörper (20) montiert ist.

5. Ventil nach einem der Ansprüche 1 bis 4, wobei sich die beiden Kammern (28, 29) auf der Außenwand des Ventilkörpers über Leitungen (36, 37) öffnen, die miteinander verbindbar sind mittels einer ringförmigen Aussparung (38), die in dem verschieblichen Ring (9) ausgebildet ist.

6. Ventil nach Anspruch 5, wobei der verschiebbare Ring (9) dazu vorgesehen ist, selektiv die Leitungen (36, 37) der beiden Kammern (28, 29) abzusperren.

7. Verpackungsbehälter für Flüssiggas, auf welchem ein Ventil nach einem der Ansprüche 1 bis 6 montiert ist.
